# EUROPÄISCHE PATENTSCHRIFT

(11) **EP 0 643 739 B1**
(45) Veröffentlichungstag und Bekanntmachung des Hinweises auf die Patenterteilung: **02.04.1997**
(21) Anmeldenummer: 93912794.0
(22) Anmeldetag: 26.05.1993
(51) Int. Cl.: C08J 9/14, C08J 9/12, C08L 25/06

(54) **VERFAHREN ZUR HERSTELLUNG VON SCHAUMSTOFFPLATTEN MIT HOHER DRUCKFESTIGKEIT AUS STYROLPOLYMERISATEN**
PROCESS FOR MANUFACTURING HIGHLY PRESSURE-RESISTANT SLABS OF CELLULAR MATERIAL FROM STYRENE POLYMERS
PROCEDE DE FABRICATION DE DALLES EN MATERIAU ALVEOLAIRE A HAUTE RESISTANCE A LA PRESSION A PARTIR DE POLYMERES DE STYRENE

(30) Priorität: 04.06.1992 DE 4218330; 29.10.1992 DE 4236579
(43) Veröffentlichungstag der Anmeldung: 22.03.1995
(73) Patentinhaber: BASF Aktiengesellschaft, 67063 Ludwigshafen (DE)
(72) Erfinder: ALICKE, Gerhard, D-6520 Worms 1 (DE); WEILBACHER, Manfred, D-6710 Frankenthal (DE); WOLFF, Bernardo, D-6800 Mannheim 1 (DE); HEINEN, Hartmut, D-5000 Koeln 71 (DE); DIETZEN, Franz-Josef, D-6700 Lugwigshafen (DE); WEBER, Reinhold, D-6704 Mutterstadt (DE); HAHN, Manfred, D-6730 Neustadt (DE)
(86) Internationale Anmeldenummer: EP9301320
(87) Internationale Veröffentlichungsnummer: WO9324560

(56) Entgegenhaltungen:
- EP-A- 0 343 473
- CHEMICAL ABSTRACTS, vol. 103, no. 26 Columbus, Ohio, US; abstract no. 216596s, AMANO,NORIO 'Sandwich panels from cellular polystyrenes'
- CHEMICAL ABSTRACTS, vol. 77, no. 6, 23. Juli 1991, Columbus, Ohio, US; abstract no. 35579n, IKETA, TOSHIKI 'Foamable polystyrene beads'
- CHEMICAL ABSTRACTS, vol. 77, no. 4, 24. April 1972, Columbus, Ohio, US; abstract no. 20848a, MIYAMOTO AKIRA & AL. 'Polyolefin foams' Seite 65 ;Spalte 1

## Beschreibung

Gegenstand der Erfindung ist ein Verfahren zur Herstellung von Schaumstoffplatten mit hoher Druckfestigkeit durch Extrusion eines Gemisches aus einem Styrolpolymerisat, einem Treibmittel oder Treibmittel-Gemisch und gegebenenfalls üblichen Zusatz- und/ oder Hilfsstoffen.

Für die Herstellung von Schaumstoffplatten auf Basis von Styrolpolymerisaten durch Extrusion ist eine Vielzahl von Treibmitteln vorgeschlagenen worden.

Beispielsweise ist aus der EP-A-464 581 ein Verfahren zur Herstellung von Schaumstoffplatten mit hoher Druckfestigkeit und einem Querschnitt von mindestens 50 cm² bekannt, bei dem ein Gemisch aus einem Styrolpolymerisat, 5 bis 16 Gew.-%, bezogen auf das Styrolpolymerisat, eines Treibmittels, sowie gegebenenfalls üblichen Zusatzstoffen, extrudiert wird, wobei als Treibmittel ein Gemisch verwendet wird, welches
a) 3 bis 70 Gew.-% eines Alkohols oder Ketons mit einem Siedepunkt zwischen 56 und 100°C,
b) 5 bis 50 Gew.-% Kohlendioxid und
c) 0 bis 90 Gew.-% eines gesättigten C₃- bis C₅-Kohlenwasserstoffs und/oder eines zwischen -30°C und +30°C siedenden, Wasserstoff enthaltenden Fluorchlor- oder Fluorkohlenwasserstoffs
enthält.

Bei den nach den bekannten Verfahren hergestellten Schaumstoffplatten ist von Nachteil, daß sich die Endwerte beispielsweise für die Wärmeformbeständigkeit relativ langsam einstellen.

Aus der JP-A 60/145 835 ist die Herstellung einer Laminatplatte mit einer Polystyrolschaumstoffschicht bekannt, wobei die Polystyrolschaumstoffschicht durch Extrusion unter Verwendung eines Ethers, wie Dimethylether, Methylethylether oder Methylvinylether, als Treibmittel hergestellt wurde.

Im Beispiel ist die Herstellung einer 6 mm dicken Platte unter Verwendung von 3,7 Gewichtsteilen Dimethylether, bezogen auf Polystyrol, als Treibmittel beschrieben.

Es ist außerdem bekannt, daß bei Verwendung von schnell aus dem Schaum diffundierenden Treibmitteln eine ausreichende Dimensions-stabilität und Druckfestigkeit von Schaumstoffplatten mit einer Plattendicke von 20 mm oder mehr, insbesondere gleich oder größer 50 mm, häufig nicht mehr gewährleistet ist.

Darüber hinaus werden bei Verwendung von Treibmitteln mit hoher Triebkraft häufig Schaumstoffe mit hohem Anteil an offenen Zellen erhalten.

So ist bei dem Verfahren gemäß der EP-A-464 581 die Herstellung von qualitativ hochwertigen Schaumstoffplatten einer Dicke von 20 mm oder darüber häufig nur bei Mitverwendung von Fluorchlor- oder Fluorkohlenwasserstoffen als Treibmittel möglich.

Die Aufgabe der Erfindung bestand darin, ein Verfahren zur Herstellung von Schaumstoffplatten aus Styrolpolymerisaten mit einer Mindestdicke von 60 mm aufzuzeigen, bei dem keine toxischen Treibmittel verwendet werden und das zu Schaumstoffen mit geschlossenen Zellen führt, die nur ein geringes Wasseraufnahmevermögen besitzen und neben guter Dimensionsstabilimät und Druckfestigkeit insbesondere eine hohe Wärmeformbeständigkeit aufweisen. Weiterhin war es Aufgabe der Erfindung, ein Verfahren bereitzustellen, welches die rasche Einstellung der Endwerte insbesondere für die Wärmeformbeständigkeit in den hergestellten Schaumstoffplatten ermöglicht.

Diese Aufgabe wird erfindungsgemäß gelöst durch ein Verfahren zur Herstellung von Schaumstoffplatten mit einer Mindestdicke von 60 mm und einem Querschnitt von mindestens 50 cm² durch Extrusion eines Gemisches aus einem Styrolpolymerisat, 1 bis 10 Gew.-%, bezogen auf das Styrolpolymerisat, eines Treibmittels sowie gegebenenfalls üblichen Zusatz- und/oder Hilfsstoffen, bei dem als Treibmittel ein Gemisch verwendet wird, welches 5 bis 55 Gew.-% Kohlendioxid, mindestens 30 Gew.-% eines Ethers aus der Gruppe Dimethylether, Methylethylether und Methylvinylether, und keinen Fluorchlor- oder Fluorkohlenwasserstoff enthält.

Styrolpolymerisate im Sinne dieser Erfindung sind Polystyrol und Mischpolymerisate des Styrols, die mindestens 50 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen, wie N-Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Erfindungsgemäß wird das Treibmittel oder Treibmittel-Gemisch in einer Menge von 1 bis 10 Gew.-%, vorzugsweise 3 bis 9 Gew.-%, insbesondere 4 bis 8 Gew.-%, bezogen auf das Styrolpolymerisat, verwendet. Es enthält mindestens 30 Gew.-% eines Ethers aus der Gruppe Dimethylether, Methylethylether und Methylvinylether.

Erfindungsgemäß haben sich Treibmittelgemische als günstig erwiesen, die 5 bis 55 Gew.-% Kohlendioxid und gegebenenfalls einen gesättigten C₃-C₅-Kohlenwasserstoff und/oder einen Alkohol oder ein Keton mit einem Siedepunkt zwischen 56 und 100°C enthalten.

Als Treibrnittelbestandteile sind beispielsweise Propan, n-Butan, i-Butan, Neopentan, n-Pentan oder i-Pentan, Ethanol, Methanol oder Aceton geeignet. Bevorzugt wird Ethanol in einer Menge von bis zu 30 Gew.-% verwendet.

In einer besonders bevorzugten Ausführungsform der Erfindung wird als Treibmittel ein Gemisch verwendet, welches
a) 45 bis 95 Gew.-% Dimethylether und
b) 5 bis 55 Gew.-% Kohlendioxid enthält.

Als übliche Zusatzstoffe können dem Styrolpolymerisat-.Treibmittel-Gemisch Antistatika, Stabilisatoren, Farbstoffe, Schmiermittel, Füllstoffe, Flammschutzmittel und/oder Keimbildner in üblichen Mengen zugesetzt werden.

Die Herstellung der Schaumstoffplatten erfolgt erfindungsgemäß in an sich bekannter Weise durch Extrusion. In einem Extruder wird das durch Erwärmen plastifizierte Styrolpolymerisat mit dem Treibmittelgemisch und den Zusatzstoffen innig vermischt. Das Gemisch durchläuft sodann eine Beruhigungszone, in der es unter ständigem Rühren auf eine Temperatur zwischen etwa 100 und 120°C gekühlt und anschließend durch eine Düse zu Platten extrudiert wird.

Erfindungsgemäß weisen die Schaumstoffplatten eine Mindestdicke von 60 mm auf. Der Querschnitt beträgt mindestens 50 cm², vorzugsweise mindestens 100 bis zu etwa 1000 cm². Die Erfindung erlaubt die Herstellung von Platten der Dicke bis 200 mm, einer Breite bis 1200 mm und einer Dichte von 25 bis 70 g/l.

In einer bevorzugten Ausführungsform des erfindungsgemäßen Verfahrens werden Schaumstoffplatten mit einer Dicke zwischen 60 und 100 mm hergestellt unter Verwendung eines Treibmittelgemisches, welches
a) 30 bis 70 Gew.-% mindestens eines Ethers aus der Gruppe Dimethylether, Methylethylether und Methylvinylether,
b) 30 bis 55 Gew.-% Kohlendioxid, und
c) 0 bis 40 Gew.-%, vorzugsweise 1 bis 20 Gew.-%, eines gesättigten C₃-C₅-Kohlenwasserstoffs und/oder Alkohols mit einem Siedepunkt zwischen 56 und 100°C
enthält.

Schaumstoffplatten mit einer Dicke von mindestens 100 mm werden in einer bevorzugten Ausführungsform des erfindungsgedanken Verfahrens hergestellt unter Verwendung eines Treibmittelgemisches, welches
a) 60 bis 95 Gew.-% mindestens eines Ethers aus der Gruppe Dimethylether, Methylethylether und Methylvinylether,
b) 5 bis 25 Gew.-% Kohlendioxid, und
c) 0 bis 30 Gew.-%, vorzugsweise 1 bis 15 Gew.-%, eines gesättigten C₃-C₅-Kohlenwasserstoffs und/oder Alkohols mit einem Siedepunkt zwischen 56 und 100°C
enthält.

Die Erfindung hat zahlreiche Vorteile. Durch das erfindungsgemäße Verfahren können auf einfache und wirtschaftliche Weise dicke Schaumstoffplatten erhalten werden, aus denen das Treibmittel rasch entweicht, ohne daß die Druckfestigkeit herabgesetzt wird. Die nach dem erfindungsgemäßen Verfahren hergestellten Schaumstoffplatten erreichen bereits nach kurzer Ablagerungszeit die Endwerte für die Druckfestigkeit und Wärmeformbeständigkeit.

Es können umweltfreundliche Treibmittel angewandt werden, die bereits in der Natur vorhanden sind oder wie Dimethylether sehr rasch abgebaut werden. Dimethylether wird in der Luft mit einer Halbwertszeit von einigen Tagen abgebaut und reichert sich somit nicht in der Atmosphäre an.

Die Erfindung wird anhand der Beispiele 1 bis 3 erläutert. Die in den Beispielen genannten Teile sind Gewichtsteile.

### Beispiel 1

100 Teile Polystyrol mit einem Schmelzindex von 4,5, 0,35 Teile Hexabromcyclododecan als Flammschutzmittel, 0,14 Teile Dicumyl und 0,51 Teile Talkum zur Regelung der Zellgröße wurden einem Extruder mit einem inneren Schneckendurchmesser von 53 mm kontinuierlich zugeführt. Durch eine in den Extruder angebrachte Einlaßöffnung wurde gleichzeitig ein Treibmittelgemisch mit der in der Tabelle 1 angegebenen Zusammensetzung kontinuierlich in den Extruder eingedrückt. Das in dem Extruder gleichmäßig geknetete Gel wurde dann nach einer Verweilzeit von 20 Minuten auf eine Austrittstemperatur von 119°C gekühlt und durch eine 50 mm breite und 1,5 mm weite Düse in die Atmosphäre extrudiert. Der Schaum wurde durch einen mit dem Extruder verbundenen Formkanal geführt, wobei eine geschäumte Polystyrolplatte mit einer Querschnittsgröße von 150 mm x 60 mm entstand.

### Beispiele 2 bis 3

100 Teile Polystyrol mit einem Schmelzindex von 4,5 sowie die in Tabelle 2 angegebenen Mengen an Hexabromcyclododecan (HBCD), Dicumyl und Talkum wurden einem Extruder mit einem inneren Schnmekkendurchmesser von 120 mm kontinuierlich zugeführt. Durch eine in den Extruder angebrachte Einlaßöffnung wurde gleichzeitig ein Treibmittelgemisch mit der in der Tabelle angegebenen Zusammensetzung kontinuierlich in den Extruder eingedrückt. Das in dem Extruder gleichmäßig geknetete Gel wurde dann nach einer Verweilzeit von 40 Minuten durch eine 300 mm breite Düse in die Atmosphäre extrudiert. Der Schaum wurde durch einen mit dem Extruder verbundenen Formkanal geführt, wobei eine geschäumte Polystyrolplatte mit einer Breite von 650 mm entstand. Der Düsenspalt sowie die Dicke und die Dichte, letztere nach DIN 53420 bestimmt, der erhaltenen Schaumstoffplatten sind in der Tabelle 2 angegeben.

In den Beispielen 1 bis 3 wurde jeweils eine gleichmäßige, geschlossenzellige und formstabile Schaumstoffplatte erhalten.

**Tabelle 1**

| Bsp. | Treibmittelmenge Gew.-% bezogen auf Polystyrol | CO₂Gew.-% | CH₃OCH₃Gew.-% | Dichte g/l | Plattendicke mm |
|---|---|---|---|---|---|
| 1 | 7,0 | 43,0 | 57,0 | 63 | 60 |

Für die Beispiel 2 und 3 wurde an den Polystyrolplatten die Dimensionsstabilität nach DIN 53431 bestimmt. Die Lagerzeit betrug jeweils 67 Tage. Die Ergebnisse sind in Tabelle 3 aufgeführt.

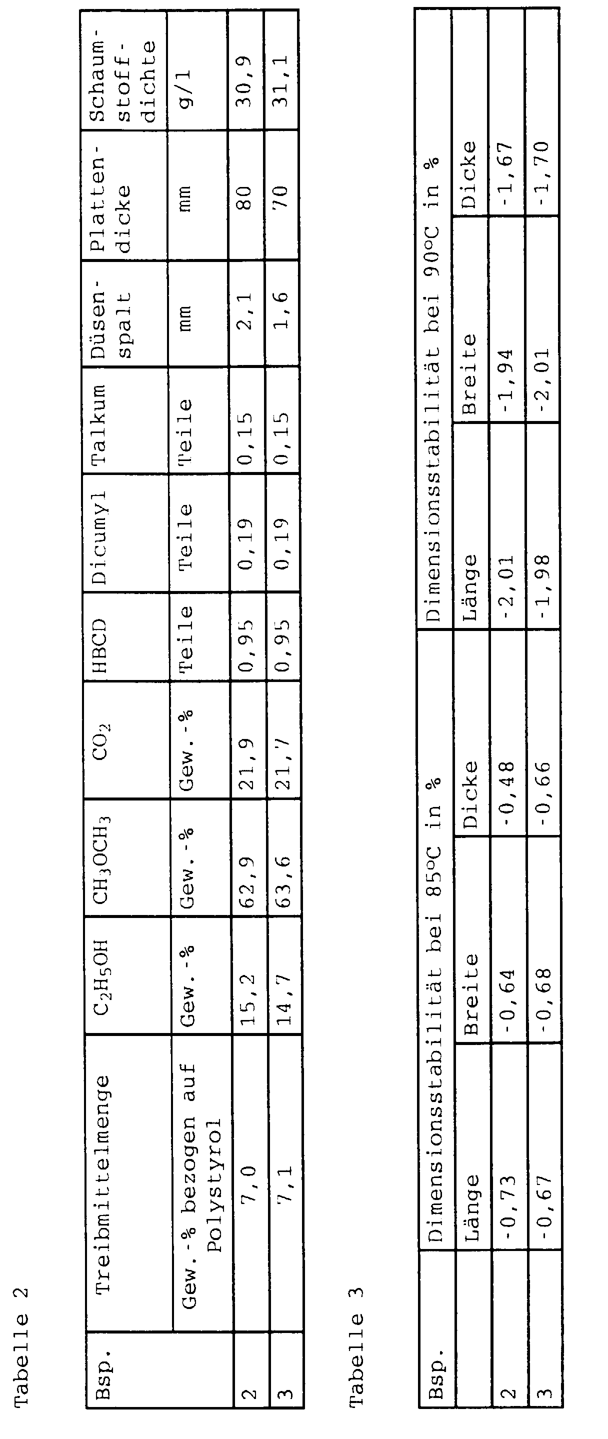

## Patentansprüche

1. Verfahren zur Herstellung von Schaumstoffplatten mit einer Mindestdicke von 60 mm und einem Querschnitt von mindestens 50 cm² durch Extrusion eines Gemisches aus einem Styrolpolymerisat, 1 bis 10 Gew.-%, bezogen auf das Styrolpolymerisat, eines Treibmittels sowie gegebenenfalls üblichen Zusatz- und/ oder Hilfsstoffen, dadurch gekennzeichnet, daß man als Treibmittel ein Gemisch verwendet, welches 5 bis 55 Gew.-% Kohlendioxid und mindestens 30 Gew.-% eines Ethers aus der Gruppe Dimethylether, Methylethylether und Methylvinylether enthält, und wobei kein Fluorchlor- oder Fluorkohlenwasserstoff mitverwendet wird.

2. Verfahren nach Anspruch 1, dadurch gekennzeichnet, daß als Ether Dimethylether verwendet wird.

3. Verfahren nach Anspruch 1, dadurch gekennzeichnet, daß zur Herstellung von Schaumstoffplatten mit einer Mindestdicke von 100 mm ein treibmittel verwendet wird, das mindestens 40 Gew.-% eines der genannten Ether enthält.

4. Verfahren nach Anspruch 1 oder 2, dadurch gekennzeichnet, daß im Treibmittelgemisch bis zu 30 Gew.-% Ethanol mitverwendet werden.

5. Verfahren nach Anspruch 1 oder 2, dadurch gekennzeichnet, daß als Treibmittel ein Gemisch verwendet wird, welches
a) 45 bis 95 Gew.-% Dimethylether und
b) 5 bis 55 Gew.-% Kohlendioxid
enthält.

## Claims

1. A process for the production of foam boards having a minimum thickness of 60 mm and a cross-sectional area of at least 50 cm² by extruding a mixture of a styrene polymer, from 1 to 10% by weight, based on the styrene polymer, of a blowing agent and, if desired, conventional additives and/or auxiliaries, wherein the blowing agent used is a mixture containing from 5 to 55% by weight of carbon dioxide and at least 30% by weight of an ether from the group consisting of dimethyl ether, methyl ethyl ether and methyl vinyl ether, no chlorofluorocarbon or fluorocarbon being present.

2. A process as claimed in claim 1, wherein the ether used is dimethyl ether.

3. A process as claimed in claim 1, wherein the foam boards having a minimum thickness of 100 mm are produced using a blowing agent containing at least 40% by weight of one of said ethers.

4. A process as claimed in claim 1 or 2, wherein up to 30% by weight of ethanol is present in the blowing agent mixture.

5. A process as claimed in claim 1 or 2, wherein the blowing agent used is a mixture containing.
a) from 45 to 95% by weight of dimethyl ether and
b) from 5 to 55% by weight of carbon dioxide.

## Revendications

1. Procédé de fabrication de plaques de mousse ou de matière expansée, d'une épaisseur minimale de 60 mm et d'une section transversale d'au moins 50 cm² par l'extrusion d'un mélange constitué d'un polymère du styrène, de 1 à 10% en poids, par rapport au polymère du styrène, d'un agent porogène comme éventuellement aussi d'additifs et/ou d'adjuvants habituels, caractérisé en ce que l'on utilise, à titre d'agent porogène, un mélange qui contient 5 à 55% en poids d'anhydride carbonique et au moins 30% en poids d'un éther appartenant au groupe de l'éther diméthylique, de l'éther méthyléthylique et de l'éther méthylvinylique et où on n'utilise ni hydrocarbure fluorochloré ni hydrocarbure fluoré.

2. Procédé suivant la revendication 1, caractérisé en ce que l'on utilise l'éther diméthylique, à titre d'éther.

3. Procédé suivant la revendication 1, caractérisé en ce que, en vue de la fabrication de plaques de mousse ou de matière expansée d'une épaisseur minimale de 100 mm, on utilise un agent porogène qui contient au moins 40% en poids d'un des éthers précités.

4. Procédé suivant la revendication 1 ou 2, caractérisé en ce que l'on utilise conjointement jusqu'à 30% d'éthanol dans le mélange d'agents porogènes.

5. Procédé suivant la revendication 1 ou 2, caractérisé en ce que, à titre d'agent porogène, on utilise un mélange qui contient
a) 45 à 95% en poids d'éther diméthylique et
b) 5 à 55% en poids d'anhydride carbonique.
